# EUROPÄISCHE PATENTSCHRIFT

(11) **EP 1 428 723 B1**
(45) Veröffentlichungstag und Bekanntmachung des Hinweises auf die Patenterteilung: **05.09.2007**
(21) Anmeldenummer: 03024263.0
(22) Anmeldetag: 23.10.2003
(51) Int. Cl.: B60R 1/06

(54) **Aussenrückblickspiegel für ein Kraftfahrzeug**
Exterior rear view mirror for a motor vehicle
Rétroviseur extérieur pour une véhicule a moteur

(30) Priorität: 12.12.2002 DE 10257983
(43) Veröffentlichungstag der Anmeldung: 16.06.2004
(73) Patentinhaber: Dr.Ing. h.c. F. Porsche Aktiengesellschaft, 70435 Stuttgart (DE)
(72) Erfinder: Körner, Gabi, 75446 Wiernsheim (DE); Robinson, Hugh, 70180 Stuttgart (DE)

(56) Entgegenhaltungen:
- US-A- 4 394 066
- US-A- 4 759 620
- US-A- 5 268 797
- US-A- 5 483 385

## Beschreibung

Die Erfindung bezieht sich auf einen Außenrückblickspiegel für ein Kraftfahrzeug, insbesondere einen Personenkraftwagen nach dem Oberbegriff des Patentanspruchs 1.

Ein bekannter Außenrückblickspiegel, GB 2 130 990, der eingangs beschriebenen Gattung weist ein Gehäuse für eine Spiegelglasplatte auf, das mittels horizontal ausgerichteter Stützarme und einer Befestigungsplatte an einem Aufbau eines Kraftfahrzeugs gehalten ist. Die Stützarme und das Gehäuse sind aus einem Stück hergestellt und bestehen aus Kunststoff. Eine vergleichbare Ausführung zeigt auch die US 4,759,620.

Aus der US 5,268,797 geht ein Außenrückblickspiegel eines Kraftfahrzeug hervor, dessen eine Spiegelglasplatte aufnehmendes Gehäuse mit einer seitlichen einem Aufbau zugewandten Halteeinrichtung versehen ist. Die Halteeinrichtung weist einen Tragbügel auf, der mit relativ kurzen Armen an das Gehäuse anschließt. Die Arme sind bereichsweise als Rudimente am Gehäuse ausgebildet, wobei zur Halterung des Bügels an den Rudimenten ein Fixierungszapfen und eine Befestigungsschraube dienen.

US4394066 offenbart Außenrückblickspiegel mit ein zweiteiliges Gehäuse, das sich aus einem ersten Gehäuseteil und einem zweiten etwa U-förmig gestalteten Gehäuseteil zusammensetzt. Das erste Gehäuseteil weist zwei in Höhenrichtung mit Abstand zueinander angeordnete nischenförmige Ausnehmungen auf und ein zwischenliegende Montageabschnitt. Nur diese Montageabschnitt verbindet eine Tragvorrichtung über eine Schraubverbindung mit dem ersten Gehäuseteil.

Es ist Aufgabe der Erfindung eine Außenrückblickspiegel für ein Kraftfahrzeug schaffen, der sich durch sich durch einfache und sichere Bauweise auszeichnet und dabei konstruktive Freiheitsgrade bietet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die getrennt voneinander hergestellten Gehäuse und Stützarme aufweisende Tragvorrichtung einen den Anforderungen entsprechenden Einsatz an Werkstoffen für diese Bauteile ermöglichen. Auch lassen sich durch diese Ausbildung vielfältige Konstruktionsvarianten verwirklichen. Durch die Tragvorrichtung und die übersichtliche Verbindungsart mit dem Gehäuse ist die Konstruktion des Außenrückblickspiegel leicht realisierbar. Auch können das Gehäuse und die Tragvorrichtung in ein Formkonzept integriert werden, mit dem eine besondere ästhetische Wirkung erzielbar ist. Schließlich trägt der V-förmigen Verlauf der Stützarme dazu bei, dass eine wirkungsvolle Abstützung des Gehäuses sichergestellt ist.

In der Zeichnung wird ein Ausführungsbeispiel der Erfindung gezeigt, das nachstehend näher beschrieben ist.

Es zeigen
- Fig. 1: eine Teilseitenansicht eines Personenkraftwagens im Bereich eines Windschutzscheibenrahmens mit einem erfindungsgemäßen Außenrückblickspiegel,

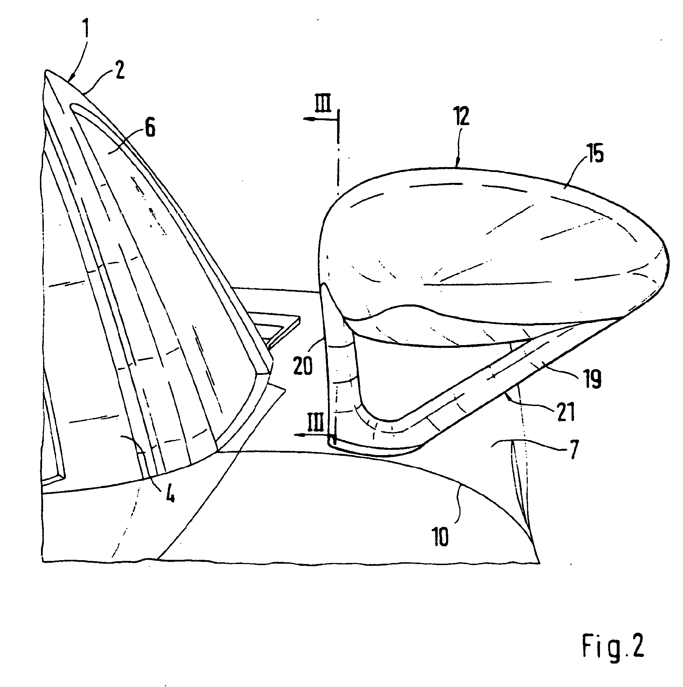

- Fig. 2: eine Ansicht Pfeilrichtung A der Fig.1,
- Fig. 3: einen Schnitt etwa nach der Linie III-III der Fig. 2,
- Fig. 4: eine explosionsartige Schrägansicht des Außenrückblickspiegels von vorne links,
- Fig. 5: eine Schrägansicht einer Tragvorrichtung des Außenrückblickspiegels.

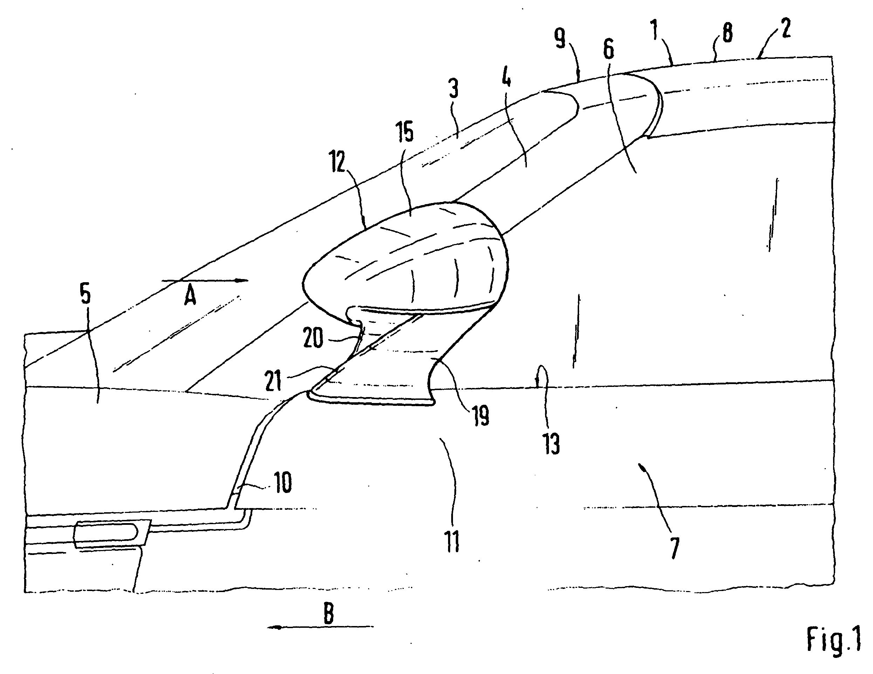

Ein Personenkraftwagen 1 der Sportwagengattung mit dynamischer äußerer Anmutung und anspruchsvollen Fahrleistungen weist in dem in Fig.1 dargestellten Bereich einen Aufbau 2 mit einem eine Windschutzscheibe 3 aufnehmendem Rahmen 4, einem vorderen Seitenteil 5, einer eine absenkbare Seitenscheibe 6 umfassender Tür 7 und einem abnehmbaren Dach 8, das sich zwischen einem Querteil 9 des Rahmens 4 und einer nicht näher dargestellten Rollbügelvorrichtung erstreckt.

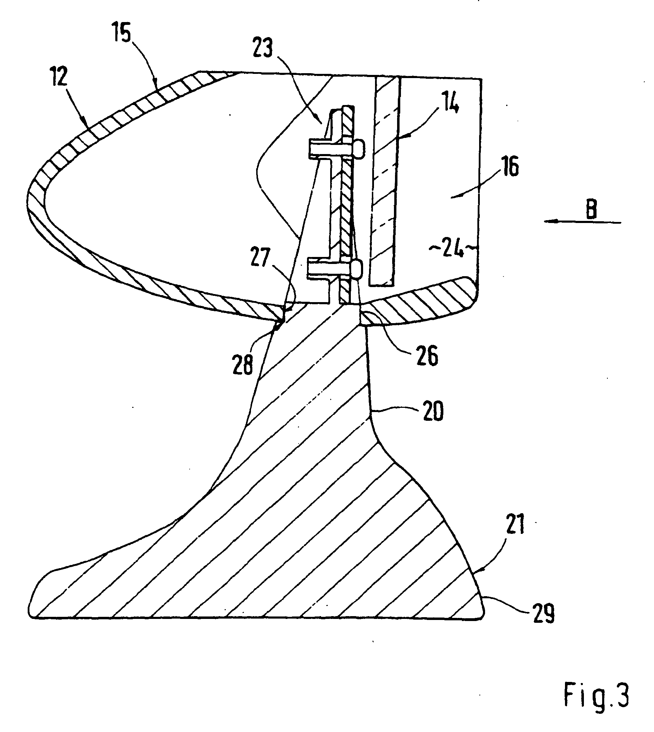

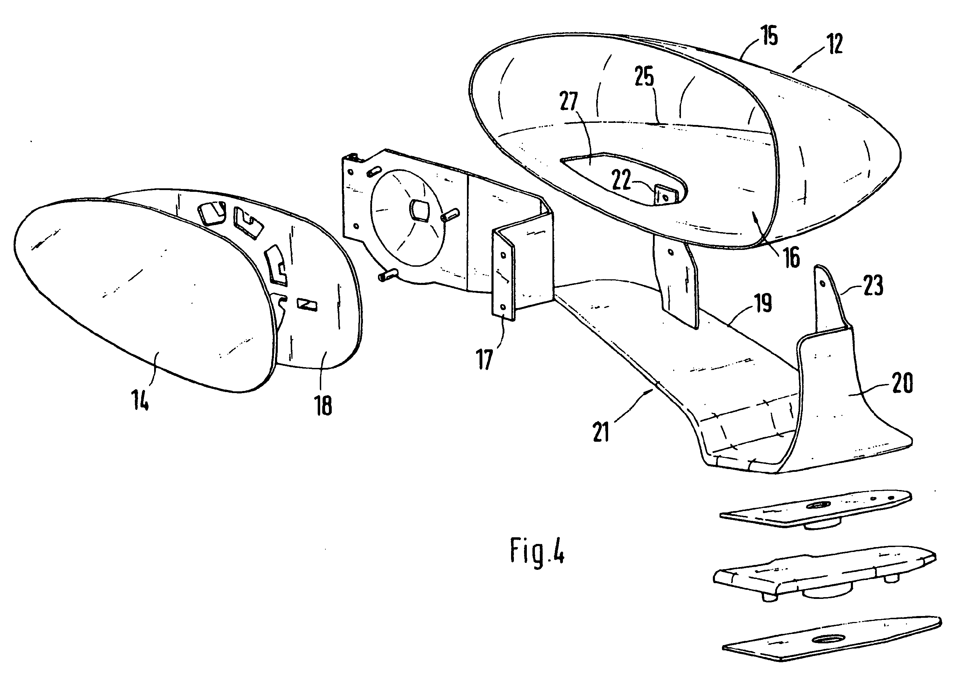

Die Tür 7 trägt benachbart einer Fuge 10 an einer Türaußenwand 11 einen Außenrückblickspiegel 12, der von einer Gürtellinie 13 des Aufbaus 2 aus emporragt. Der Außenrückblickspiegel 12 besitzt ein eine Spiegelglasplatte 14 - Fig. 3 - umgebendes Gehäuse 15, das aus Kunststoff oder einem anderen geeigneten Werkstoff besteht und die Form einer liegenden Schale und in Fahrtrichtung B einer aerodynamische bzw. in etwa tropfenförmige Gestalt aufweist, wobei über eine Gehäuseöffnung 16 eine Konsole 17, ein Spiegelglasplattenträger 18 und die Spiegelglasplatte 14 eingebracht werden - Fig. 4 -.

Das Gehäuse 15 ruht auf einer mit Stützarmen 19 und 20 versehenen Tragvorrichtung 21, die bspw. aus Metall, vorzugsweise einer Leichtmetalllegierung besteht und mit der Türaußenwand 11 sich auf ihr abstützend verbunden ist. Die Tragvorrichtung 21 bzw. die Stützarme 19 und 20 und das Gehäuse 15 sind aufgrund vorstehender Werkstoffangaben getrennt voneinander hergestellt. Dabei ragen freie Enden 22 und 23 in einen Innenraum 24 des Gehäuse 15 hinein, und sie sind mit Tragelementen 25 des Gehäuses 15 verbunden; besagte Tragelemente 25 sind aus einem Stück mit dem Gehäuse 15 hergestellt. Jeder Stützarm z. B 19 durchringt mit einem Kragen 26 eine Öffnung 27 im Gehäuse 15, und das Gehäuse 15 liegt auf einer Schulter 28 auf, die den Kragen 26 begrenzt.

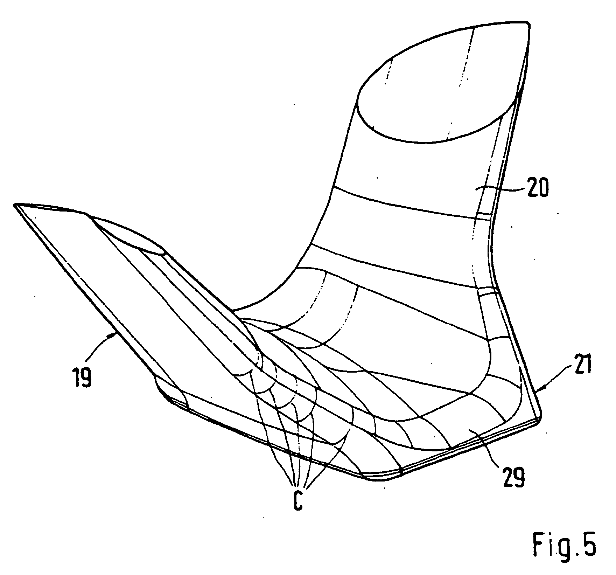

Damit das Gehäuse 15 einen funktionsgerechten Halt auf der Tragvorrichtung 21 besitzt, weisen die relativ aufrecht ausgerichteten Stützarme 19 und 20 von einem Grundabschnitt 29 der Tragvorrichtung 21 aus bis zum Gehäuse 15 hin einen V-förmigen Verlauf auf. Schließlich sind die Stützarme 19 und 20 in Fahrtrichtung B gesehen aerodynamisch geformt - Fig. 5 -, was bei C dargestellt ist.

## Patentansprüche

1. Außenrückblickspiegel (12) für ein Kraftfahrzeug, bei dem ein eine Spiegelglasplatte aufnehmendes Gehäuse (15) mit einer Stützarme (19, 20) aufweisenden Tragvorrichtung (21) verbunden ist, wobei die Tragvorrichtung (21) und das Gehäuse (15) getrennte Bauteile sind und die Tragvorrichtung (21) sich an einem Aufbau (2) des Personenkraftwagens abstützt, **dadurch gekennzeichnet, dass** freie Enden (22, 23) der Stützarme (19, 20) der Tragvorrichtung (21) in das Gehäuse (15) hineinragen und mit Tragelementen (25) des Gehäuses (15) verbunden sind und dass jeder Stützarm (19, 20) mit einem Kragen (26) eine Öffnung (27) im Gehäuse (15) durchdringt, und das Gehäuse (15) im Bereich der Öffnung (27) auf einer den Kragen (26) begrenzenden Schulter (28) aufliegt.

2. Außenrückblickspiegel nach Anspruch 1, **dadurch gekennzeichnet, dass** das Gehäuse (15) aus einem Kunststoff hergestellt ist.

3. Außenrückblickspiegel nach Anspruch 1, **dadurch gekennzeichnet, dass** die Tragvorrichtung (21) aus Metall bspw. einem Leichtmetall-Druckguss besteht.

4. Außenrückblickspiegel nach Anspruch 1, **dadurch gekennzeichnet, dass** die Tragvorrichtung (21) zwei Stützarme (19 und 20) umfasst, die von einem Grundabschnitt (29) der Tragvorrichtung (21) aus bis zum Gehäuse (15) hin einen V-förmigen Verlauf aufweisen.

5. Außenrückblickspiegel nach Anspruch 5, **dadurch gekennzeichnet, dass** die Stützarme (19 und 20) eine aerodynamische Form besitzen.

6. Außenrückblickspiegel nach den Ansprüchen 1 und 2, **dadurch gekennzeichnet, dass** die Tragelemente (25) und das Gehäuse (15) aus einem Stück hergestellt sind.

## Claims

1. An exterior rearview mirror (12) for a motor vehicle, in which a housing (15), which receives a mirror-glass plate, is connected to a carrying device (21) having supporting arms (19, 20), wherein the carrying device (21) and the housing (15) are separate components and the carrying device (21) is supported on a body (2) of the passenger vehicle, **characterised in that** free ends (22, 23) of the supporting arms (19, 20) of the carrying device (21) project into the housing (15) and are connected to carrying members (25) of the housing (15), and **in that** each supporting arm (19, 20) has a collar (26) which extends through an opening (27) in the housing (15), and in the region of the opening (27) the housing (15) rests on a shoulder (28) forming the boundary of the collar (26).

2. An exterior rearview mirror according to claim 1, **characterised in that** the housing (15) is manufactured from a plastics material.

3. An exterior rearview mirror according to claim 1, **characterised in that** the carrying device (21) consists of metal, for example a light-metal diecasting.

4. An exterior rearview mirror according to claim 1, **characterised in that** the carrying device (21) comprises two supporting arms (19 and 20) which extend in the shape of a V from a base portion (29) of the carrying device (21) to the housing (15).

5. An exterior rearview mirror according to claim 4, **characterised in that** the supporting arms (19 and 20) have an aerodynamic form.

6. An exterior rearview mirror according to claims 1 and 2, **characterised in that** the carrying members (25) and the housing (15) are manufactured in one piece.

## Revendications

1. Rétroviseur extérieur (12) pour un véhicule automobile, dans lequel un boîtier (15), destiné à recevoir un miroir, est assemblé à un dispositif de support (21) muni de bras de support (19, 20), le dispositif de support (21) et le boîtier (15) étant des pièces séparées et le dispositif de support (21) prenant appui sur une carrosserie (2) d'un véhicule de tourisme, **caractérisé en ce que** des extrémités libres (22, 23) des bras de support (19, 20) du dispositif de support (21) s'engagent à l'intérieur du boîtier (15) et sont assemblées à des éléments de support (25) du boîtier (15) et **en ce que** chaque bras de support (19, 20) traverse avec un collet (26) une ouverture (27) dans le boîtier (15), et le boîtier (15) est en appui dans la zone de l'ouverture (27) sur un épaulement (28) délimitant le collet (26).

2. Rétroviseur extérieur selon la revendication 1, **caractérisé en ce que** le boîtier (15) est réalisé en matière plastique.

3. Rétroviseur extérieur selon la revendication 1, **caractérisé en ce que** le dispositif de support (21) est réalisé en métal, par exemple une pièce en métal léger coulée sous pression.

4. Rétroviseur extérieur selon la revendication 1, **caractérisé en ce que** le dispositif de support (21) comporte deux bras de support (19 et 20) qui présentent un tracé en forme de V à partir d'une partie de base (29) du dispositif de support (21) jusque vers le boîtier (15).

5. Rétroviseur extérieur selon la revendication 4, **caractérisé en ce que** les bras de support (19 et 20) ont une forme aérodynamique.

6. Rétroviseur extérieur selon les revendications 1 et 2, **caractérisé en ce que** les éléments de support (25) et le boîtier (15) sont réalisés d'un seul tenant.
